# EUROPEAN PATENT SPECIFICATION

(11) **EP 1 153 826 B1**
(45) Date of publication and mention of the grant of the patent: **04.10.2006**
(21) Application number: 00118369.8
(22) Date of filing: 24.08.2000
(51) Int. Cl.: B62K 3/00, A63C 17/00

(54) **Skateboard and footrest for skateboards**
Tretroller und Fussablage für Tretroller
Trottinette et appui-pieds pour trottinette

(30) Priority: 18.02.2000 JP 2000040377
(43) Date of publication of application: 14.11.2001
(73) Proprietor: Atras Auto Co., Ltd., Ibaraki-shi, Osaka 567-0865 (JP)
(72) Inventor: Yamabe, Hideyasu, Osaka-shi, Osaka 532-0004 (JP); Tsai, Shui Te, Changhua (TW)
(74) Representative: Kloiber, Thomas

(56) References cited:
- DE-U- 20 012 234
- DE-U- 20 019 039
- DE-U- 29 710 509
- DE-U- 29 715 152
- GB-A- 222 668
- US-A- 1 689 916
- US-A- 4 799 701

## Description

### TECHNICAL FIELD

The present invention relates to a skateboard having running-purpose wheels at the front and rear ends of a board on which a rider puts one or both of his feet, and to a footrest for skateboards.

### BACKGROUND ART

Heretofore, there has been known a skateboard that has running-purpose wheels at the front and rear ends of a board main body on which a rider puts one foot, a handle shaft extending upward from the front end wheel, and a handle at the upper end of the handle shaft. Such skateboard is driven to run when a rider gripping the handle and putting his one foot on the board main body kicks the ground with the other foot. The direction of the front wheel is changed by changing the direction of the handle either right and left. Thus, the direction in which the skateboard runs can be changed.

However, with such function alone, there are problems that a sharp-angle turn or a so-called kick turn cannot be made and that it is difficult to increase sportability associated with riding the skateboard.

US 4,799,701 discloses a scooter having the features of the above prior art skateboard additionnally equipped with a footrest disposed at the rear end of the board main body such that the upper end of the footrest is positioned above the wheel and board main body. The footrest may, however, be undesirable for certain maneuvers to be performed with the skateboard.

### DISCLOSURE OF THE INVENTION

The present invention solves the problems and has an object of providing a skateboard having running-purpose wheels at the front and rear ends of a board main body, which allows a rider to make a kick turn and enjoy increased sportability associated with riding the skateboard.

Summary of the invention to achieve this object is a skateboard according to claim 1.

Thus, according to the invention, a detachably mounted footrest is provided at the rear end of the board main body, so that when a rider putting one foot on the board main body strongly kicks the footrest downward with the other foot, the front end of the board main body is lifted above the ground, at which moment the rider can make a kick turn to change the direction of the board main body at a sharp angle. By this, sportability associated with riding the skateboard can be improved.

Further, with the skateboard having a handle shaft extending upward from a wheel disposed at the front end of a board main body on which a rider puts his one foot, and designed to be propelled when the rider gripping the handle kicks the ground with his the other foot, the rider may put his the other foot on the footrest during a normal skating, without the need to float his the other foot up above the ground.

### BRIEF DESCRIPTION OF THE DRAWINGS

Fig. 1 is an overall perspective view of a skateboard according to an embodiment of the invention;
Fig. 2 is a perspective view of a footrest attached to the rear end of the skateboard;
Fig. 3 is an enlarged perspective view of a footrest attaching portion;
Fig. 4 is an enlarged sectional view of a footrest attaching portion; and
Fig. 5 is a perspective view showing the folded state of the skateboard.

### DESCRIPTION OF THE EMBODIMENTS

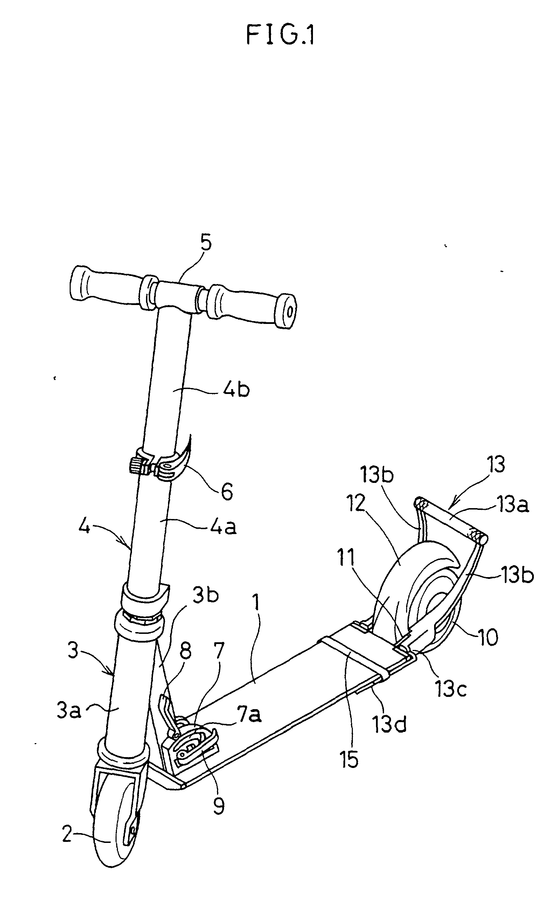

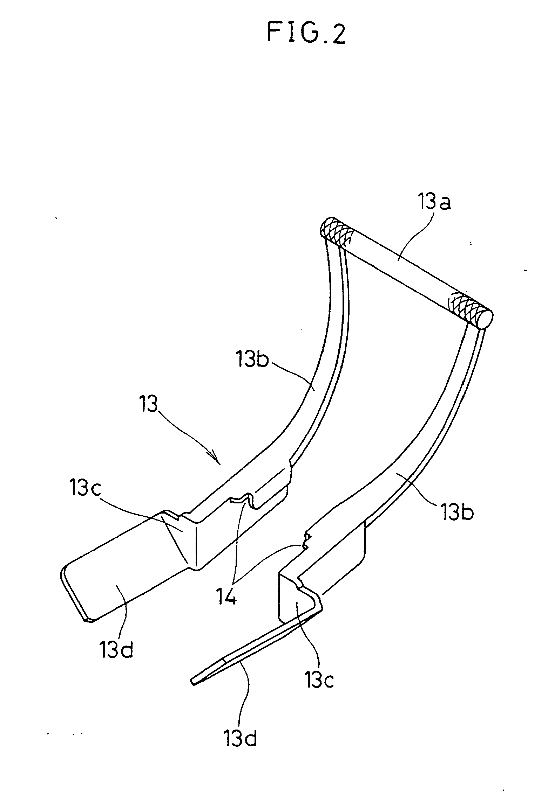

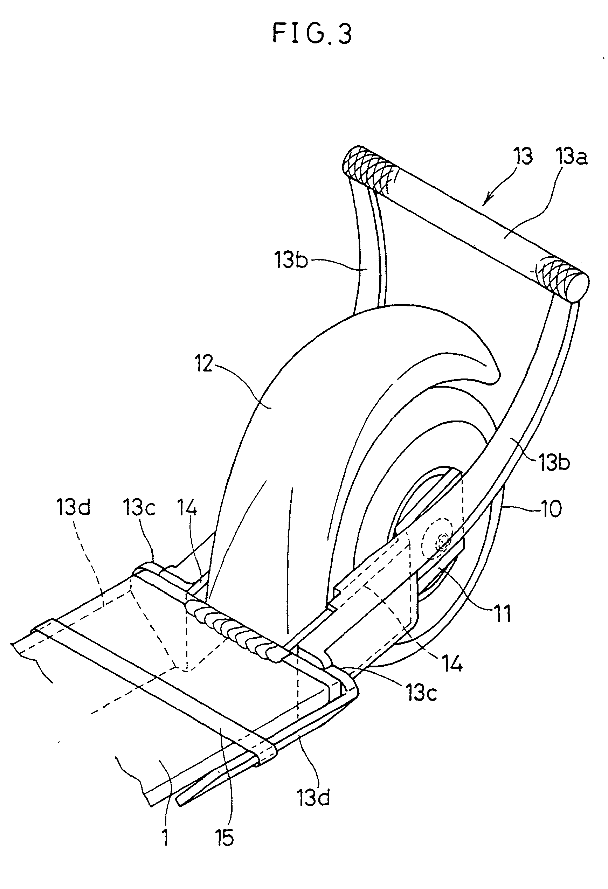

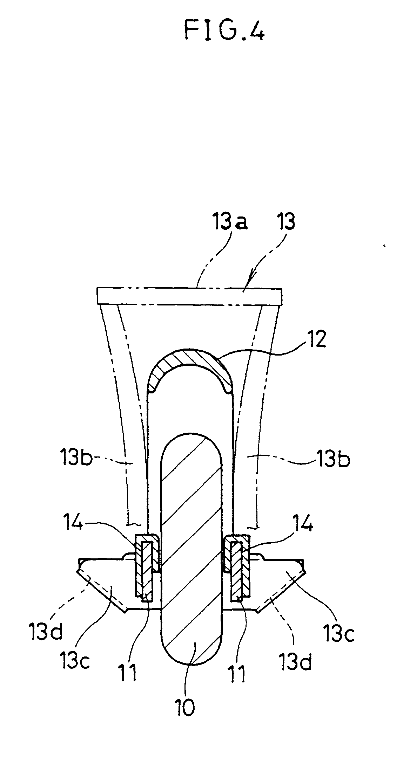

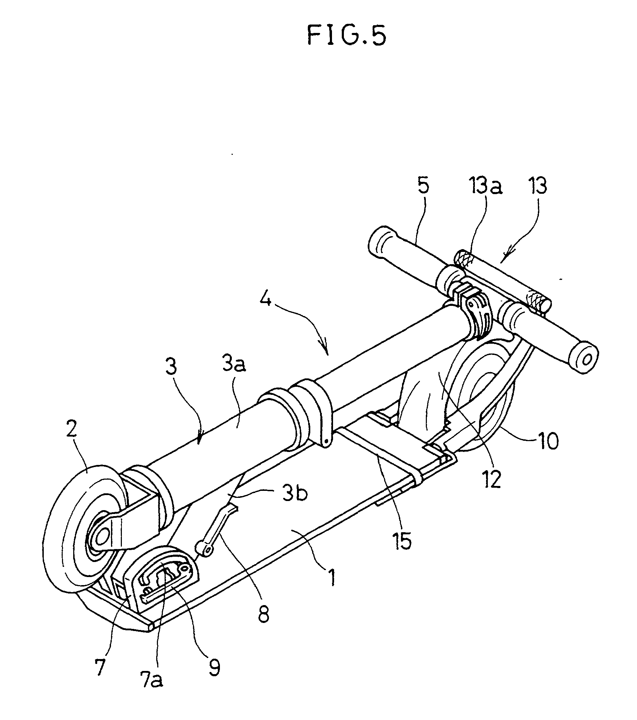

Figs. 1 - 5 show an embodiment of the invention.

In Figs. 1 - 5, reference numeral 1 denotes a board main body on which one foot of a rider is put, the front end of said board main body 1 having a wheel attaching member 3 for attaching a wheel 2 on the front end side, the wheel being supported for rotation around a horizontal axis at the lower end of a handle shaft 4 vertically extending through a sleeve portion 3a of the wheel attaching member 3. The handle shaft 4 extends through the sleeve portion 3a of the wheel attaching member 3 and is held by the sleeve portion 3a of the wheel attaching member 3 such that it is inclined backward at a slight angle. The handle shaft 4 extending upward from the sleeve portion 3a of the wheel attaching member 3 is configured such that an upper handle shaft portion 4b is received in a lower handle shaft portion 4a supported by the sleeve portion 3a to form a telescopic system.

A handle 5 is attached to the upper end of the upper handle shaft portion 4b at a right angle. Reference numeral 6 denotes a lock lever installed on the upper end of the lower handle shaft portion 4a and serves to lock the upper handle shaft portion 4b immovable relative to the lower handle shaft portion 4a, with the upper handle shaft portion 4b having been drawn out to a necessary height above the lower handle shaft portion 4a and being received in the lower handle shaft portion 4a. Further, said handle shaft 4 is adapted to be folded integrally with the wheel attaching member 3 to rest on the board main body 1.

More particularly, a connecting frame 3b integrally attached to and extending rearward obliquely downward from the sleeve portion 3a of the handle shaft attaching member 3 is guided with respect to the front end of the board main body 1 by an axle (not shown) movable along arcuate guide holes 7a formed in a pair of guide brackets 7 fixed to the board main body 1 on opposite sides of the connecting frame 3b and is supported to be swingable around a horizontal axis (not shown). Locking is effected in two states: a state in which the handle shaft 4 is erected and ready for use with said axle fitting in recesses formed at respective one ends of the arcuate guide holes 7a; and a state in which the handle shaft 4 and the handle shaft attaching member 3 are folded and resting on the board main body 1 with said axle fitting in recesses formed at respective the other ends of the arcuate guide holes 7a.

Reference numeral 8 denotes an operating lever for raising said axle from the recesses at the respective one ends of the arcuate guide hole 7a and the recesses at the respective the other ends, when the handle shaft attaching member 3 is turned upright or down flat.

Reference numeral 9 denotes a lock lever attached to one end of the axle such that flanges on the opposite ends of said are pressed against the outer surfaces of the pair of guide brackets 7, thereby to effect locking in the state where the handle shaft 4 is erected and ready for use and in the state where the handle shaft 4 and the handle shaft attaching member 3 are folded and resting on the board main body 1.

Next, the rear end of the board main body 1 is provided with a wheel attaching member 11 projecting rearward from the board main body 1 in order for attaching a rear end wheel 10 to the board main body. The wheel attaching member 11 supports the rear end wheel 10 to be rotatable around a horizontal axis.

The wheels 2 and 10 installed at the front and rear ends of the board main body 1 as described above have their upper ends projecting above the upper surface of the board main body 1 in the state where the handle shaft 4 is erected and ready for use.

And attached to the rear end of the board main body 1 is a cover-like brake plate 12 covering the upper side of the rear end wheel 10. This brake plate 12 is urged by a spring (not shown) to somewhat float up above the upper end of the rear end wheel 10. By stepping down the brake plate 12, the upper end of the rear end wheel 10 is pressed by this brake plate 12, thereby effecting breaking.

Further, a footrest 13 is installed on the rear end side of the board main body 1 such that its upper end is positioned above the board main body 1, rear end wheel 10 and brake plate 12. That is, the footrest 13 has its upper end positioned above the brake plate 12, and is supported at its lower end to the wheel attaching member 11 and rear end of the board main body 1 in such a manner as to stride over the rear end wheel 10 without touching the rear end wheel 10 and brake plate 12.

More particularly, the footrest 13 is approximately gate-shaped, wherein a connected portion 13a at the upper end thereof is positioned above the brake plate 12, opposite side portions 13b connected to the opposite ends of the portion 13a are positioned on opposite sides of the rear end wheel 10. Grooves 14 formed in the opposite side portions 13b adjacent the lower ends thereof are fitted from above over said wheel attaching member 11. Front ends 13c of the opposite side portions 13b are abutted against the rear end surface of the board main body 1, and inclined plate portions 13d projecting forward from the front ends 13c are abutted against the rear end lower surface of said board main body 1. A clamp band 15 is wound around the abutted portions between the inclined plate portions 13d and the rear end lower surface of the board main body 1, allowing the footrest 13 to be removable.

Further, in the embodiment shown in the drawings, the connecting portion 13a at the upper end is positioned above the brake plate 12 in the vicinity of the rear ends of the rear end side wheel 10 and brake plate 12. The height of the connecting portion 13a is set so that a rider can step on the connecting portion 13a with the heel of his shoe while pressing the brake plate 12 with the sole of his shoe, thereby effecting braking.

However, the height of the connecting portion 13a is not limited to this. In addition, in attaching the footrest 13 to the skate board, set screws or the like may be used for fixing, instead of the clamp band 15.

The skateboard in the embodiment described above is thus provided with the footrest 13 at the rear end of the board main body 1, so that when the footrest 13 is strongly kicked downward with the other foot than the one put on the board main body 1, the front end of the board main body 1 floats up above the ground, at which moment the direction of the board main body 1 can be changed at a sharp angle to effect a kick turn. Thus, it is realized to improve sportability associated with riding the skateboard.

As shown in the drawings, the skateboard is provided with the handle shaft 4 extending upward from the wheel 2 installed at the front end of the board main body 1 on which a rider put his one foot and with the handle 5 disposed on the upper end of the handle shaft 4, and is designed to be propelled when the rider gripping the handle 5 kicks the ground with his the other foot, so that the rider can put his the other foot on the footrest 13 during a normal run, without the need to float his the other foot up above the ground.

In this connection, the skateboard described above is provided with the brake plate 12 and the handle 5 on the upper end of the handle shaft 4, but this brake plate 12 may be dispensed with and the handle 5 may be replaced by a grip installed on the upper end of the handle shaft 4. Further, both of these handle shaft 4 and handle 5 may be dispensed with. It is possible to obtain similar advantages by adding the footrest 13.

Further, the skateboard described above is provided with two wheels 2 and 10 respectively at the front end and the rear end of the board main body 1, but the number of the wheels 2, 10 is not limited.

## Claims

1. A skateboard having running-purpose wheels (2, 10) at the front and rear ends of a board main body (1), wherein the skateboard includes an approximately gate-shaped footrest (13) disposed at the rear end of the board main body (1) such that the upper end of the footrest is positioned above the wheel (10) and board main body (1), **characterized in that** said footrest (13) is detachably mounted to the board main body (1).

2. A skateboard as set forth in Claim 1, **characterized by** a handle shaft (4) extending upward from the front end wheel (2).

## Patentansprüche

1. Rollbrett mit Rädern (2, 10) zum Zwecke des Laufens an dem vorderen und hinteren Ende eines Bretthauptrumpfes (1), wobei das Rollbrett eine näherungsweise torförmige Fußablage (13) beinhaltet, welche am hinteren Ende des Bretthauptrumpfes (1) derart vorgesehen ist, dass das obere Ende der Fußablage oberhalb des Rades (10) und des Bretthauptrumpfes (1) angeordnet ist, **dadurch gekennzeichnet, dass** die besagte Fußablage (13) abnehmbar an dem Bretthauptrumpf (1) befestigt ist.

2. Rollbrett nach Anspruch 1, **gekennzeichnet durch** eine Lenkstange (4), welche sich ausgehend von dem Rad (2) am vorderen Ende nach oben erstreckt.

## Revendications

1. Trottinette disposant de roues aux fins de déplacement (2, 10) aux extrémités avant et arrière d'un corps principal de trottinette (1), dans laquelle la trottinette comporte un repose-pied approximativement en forme de portail (13) disposé à l'extrémité arrière du corps principal de la trottinette (1) de telle sorte que l'extrémité supérieure du repose-pied est positionnée au dessus de la roue (10) et du corps principal de la trottinette (1),
**caractérisée en ce que** ledit repose-pied (13) est monté de façon amovible sur le corps principal de la trottinette (1).

2. Trottinette selon la revendication 1, **caractérisée par** un guidon (4) se prolongeant en direction du haut à partir de la roue de l'extrémité avant (2).
